# EUROPÄISCHE PATENTANMELDUNG

(11) **EP 1 679 464 A1**
(43) Veröffentlichungstag der Anmeldung: **12.07.2006**
(21) Anmeldenummer: 05090339.2
(22) Anmeldetag: 17.12.2005
(51) Int. Cl.: F16L 37/36

(54) **Aseptische Kupplungsvorrichtung**

(30) Priorität: 17.12.2004 DE 102004062176
(71) Anmelder: Roman Seliger GmbH, 22848 Norderstedt (DE)
(72) Erfinder: Kopplin, Gerhard, 22885 Barbüttel (DE); Gut, Frank, 25494 Borstel-Hohenraden (DE)
(74) Vertreter: Wenzel & Kalkoff

(57) **Zusammenfassung**

Die Erfindung betrifft eine Kupplungsvorrichtung, insbesondere zum Verbinden von flüssige oder gasförmige Medien transportierende Förderleitungen, umfassend zwei Kupplungshälften (11, 12) mit jeweils einer Gehäusehälfte (13, 14) zur Bildung eines Gehäuses (15) mit einem Strömungskanal (16), von denen eine Kupplungshälfte (11) als Patrixteil ausgebildet ist und einen vorbelastet gegen einen am kupplungshälfteseitigen Ende (25) vorgesehenen Ventilsitz (24) angeordneten Ventilteller (22) aufweist und die andere Kupplungshälfte (12) als Matrixteil ausgebildet ist und einen vorbelastet gegen einen am kupplungshälfteseitigen Ende (30) vorgesehenen Ventilstößelsitz (29) angeordneten Ventilstößel (27) aufweist, wobei die Kupplungsvorrichtung (10), insbesondere mittels eines Kurvengetriebes infolge einer Drehbewegung zwischen den Kupplungshälften (11, 12), aus einer Ventil-Schließstellung in eine Ventil-Öffnungsstellung und umgekehrt bringbar ist und über Dichtelemente jeweils zum Dichten der Kupplungshälften (11, 12) in entkuppeltem Zustand und zum Dichten des Gehäuses (15) nach außen in gekuppeltem Zustand verfügt, wobei der Ventilteller (22) und der Ventilstößel (27) mit ihren einander zugekehrten Stirnflächen (31, 32) mindestens in der Ventil-Öffnungsstellung gegenüber dem Strömungskanal (16) abgedichtet sind, die sich dadurch auszeichnet, daß ein erstes Dichtelement (33) wahlweise dem Ventilteller (22) oder dem Ventilstößel (27) und ein zweites Dichtelement (37) entsprechend wahlweise dem Matrixteil oder dem Patrixteil zugeordnet ist, wobei beide Dichtelemente (33, 37) jeweils zwei separate Dichtflächen (38, 39; 41, 42) mit unterschiedlichen Dichtfunktionen aufweisen.

## Beschreibung

Die Erfindung betrifft eine Kupplungsvorrichtung, insbesondere zum Verbinden von flüssige oder gasförmige Medien transportierende Förderleitungen, umfassend zwei Kupplungshälften mit jeweils einer Gehäusehälfte zur Bildung eines Gehäuses mit einem Strömungskanal, von denen eine Kupplungshälfte als Patrixteil ausgebildet ist und einen vorbelastet gegen einen am kupplungshälfteseitigen Ende vorgesehenen Ventilsitz angeordneten Ventilteller aufweist und die andere Kupplungshälfte als Matrixteil ausgebildet ist und einen vorbelastet gegen einen am kupplungshälfteseitigen Ende vorgesehenen Ventilstößelsitz angeordneten Ventilstößel aufweist, wobei die Kupplungsvorrichtung, insbesondere mittels eines Kurvengetriebes infolge einer Drehbewegung zwischen den Kupplungshälften, aus einer Ventil-Schließstellung in eine Ventil-Öffnungsstellung und umgekehrt bringbar ist und über Dichtelemente jeweils zum Dichten der Kupplungshälften in entkuppeltem Zustand und zum Dichten des Gehäuses nach außen in gekuppeltem Zustand verfügt, wobei der Ventilteller und der Ventilstößel mit ihren einander zugekehrten Stirnflächen mindestens in der Ventil-Offnungsstellung gegenüber dem Strömungskanal abgedichtet sind.

Derartige Kupplungsvorrichtungen für Schlauch- bzw. Rohrleitungen können als Trockenkupplung oder insbesondere auch als sogenannte aseptische Kupplungen bezeichnet bzw. eingesetzt werden sowie ausgebildet sein. In entkuppeltem Zustand sind die Kupplungshälften voneinander gelöst. Das Ventil ist geschlossen. Das bedeutet, daß der Ventilteller, vorzugsweise im Patrixteil, gegen den korrespondierenden Ventilsitz drückt und die Kupplungshälfte verschließt. Entsprechend liegt der Ventilstößel an dem entsprechenden Ventilstößelsitz im Matrixteil an und verschließt dieses. In gekuppeltem Zustand liegen Ventilteller und Ventilstößel mit ihren Stirnflächen zunächst noch in einer Ventil-Schließstellung einander gegenüber und mindestens im Randbereich auch aneinander. Durch übliche Betätigungsmittel bzw. - mechanismen, wie z.B. das Kurvengetriebe oder lineare Spannelemente, ist das Ventil in seine Öffnungsstellung bringbar. Sowohl der Ventilteller als auch der Ventilstößel sind dann aus ihren jeweiligen Sitzen gelöst. In dieser Ventil-Öffnungsstellung ist der Strömungskanal zum Durchfluß des zu transportierenden Mediums geöffnet.

Gerade bei aseptischen Kupplungen, die insbesondere in der chemischen und pharmazeutischen Industrie sowie in der Lebensmittelindustrie zum Einsatz kommen, ist es erforderlich und zum Teil sogar vorgeschrieben, daß sie einerseits eine sichere und dichte Verbindung schaffen und andererseits beim Kuppeln und Entkuppeln keinerlei Medium nach außen dringen lassen. Weiterhin ist es erwünscht und notwendig, daß sich die Kupplungsvorrichtung leicht reinigen läßt, um insbesondere in gekuppeltem Zustand im Bereich des Strömungskanals kontaminationsfrei zu sein.

Bei den bekannten Kupplungsvorrichtungen sind daher mehrere Dichtelemente, nämlich mindestens drei Dichtelemente vorgesehen. Sowohl in dem Ventilteller als auch in dem Teller des Ventilstößels ist ein Dichtmittel, üblicherweise ein O-Ring, radial angeordnet, der den jeweiligen Teller in der Ventil-Schließstellung gegen den korrespondierenden Sitz abdichtet. Diese zwei Dichtmittel werden auch als innere Dichtung bezeichnet. Das dritte Dichtmittel, die sogenannte äußere Dichtung, ist üblicherweise im Mutterteil angeordnet und dichtet die Kupplungsvorrichtung in gekuppeltem Zustand bzw. das Gehäuse nach außen hin ab. Bekannte Kupplungsvorrichtungen weisen jedoch erhebliche Nachteile auf. Jedes Dichtmittel weist lediglich eine einzige Dichtfunktion auf, was eine Mehrzahl von Dichtmitteln erforderlich macht. Dies ist neben den erhöhten Herstellkosten auch aufwendiger in der Monatage sowie Wartung. Des weiteren ist eine solche Kupplungsvorrichtung lediglich totraumarm. Das bedeutet, daß sich mindestens zwischen den beiden aneinanderliegenden Tellern ein Totraum bildet, in dem sich das zu fördernde Medium sammeln kann. Beim Lösen der Kupplungsvorrichtung gelangt dieses Medium nach außen an die Umwelt. Ein weiterer Nachteil besteht darin, daß die Teller bzw. die Tellerflächen in entkuppeltem Zustand der Umgebung ausgesetzt sind. Das heißt, daß die Tellerflächen mit Keimen oder anderen Kontaminationen belastet werden. Vor einem erneuten Kupplungsvorgang müssen diese Tellerflächen daher gereinigt werden, um zu verhindern, daß die Kontaminationen beim Durchströmen der Kupplungsvorrichtung in das zu fördernde Medium gezogen werden bzw. anderweitig in dieses gelangen. Dieser zusätzliche Vorgang ist zeit- und kostenintensiv. Weiterhin ist die Reinigung bekannter Kupplungsvorrichtungen aufwendig und schwierig, da gerade im Bereich der Dichtelemente Ecken und Kanten gebildet sind, in denen sich Schmutz oder andere Verunreinigungen ablagern können, die nur schwer entfernbar sind.

Aus der US 4,359,066 ist eine Kupplungsvorrichtung mit den Merkmalen des Oberbegriffs des Anspruches 1 bekannt. Die darin beschriebene Vorrichtung weist auch ein Dichtelement auf, das zur Vermeidung eines Totraumes zwischen dem Ventilteller und dem Ventilstößel angeordnet ist. Allerdings sind auch bei dieser Vorrichtung drei Dichtelemente notwendig, um die gewünschten bzw. erforderlichen Dichtfunktionen zu erfüllen.

Es ist daher Aufgabe der vorliegenden Erfindung, eine einfach handhabbare Kupplungsvorrichtung zu schaffen, die ein sicheres und gegenüber der Umgebung rückstandsfreies Kuppeln und Entkuppeln gewährleistet.

Diese Aufgabe wird durch eine Kupplungsvorrichtung der eingangs genannten Art dadurch gelöst, daß ein erstes Dichtelement wahlweise dem Ventilteller oder dem Ventilstößel und ein zweites Dichtelement entsprechend wahlweise dem Matrixteil oder dem Patrixteil zugeordnet ist, wobei beide Dichtelemente jeweils zwei separate Dichtflächen mit unterschiedlichen Dichtfunktionen aufweisen. Durch diese Ausbildung ist gewährleistet, daß die Kupplungsvorrichtung totraumfrei ist. Mit anderen Worten wird die Fläche bzw. der Raum zwischen dem Ventilteller und dem Ventilstößel gegenüber dem Strömungskanal vollständig abgeschottet, so daß sich in diesem Bereich kein Medium sammeln kann. Dadurch ist die Kupplungsvorrichtung beim Entkuppeln, also Lösen der beiden Kupplungshälften zum einen tropffrei. Zum anderen kommen die beiden Tellerflächen zu keiner Zeit mit dem Medium in Berührung, so daß vor dem erneuten Kuppeln auf eine Reinigung der Tellerflächen verzichtet werden kann. Dadurch, daß jedes Dichtelement zwei Dichtfunktionen erfüllt, kann die Anzahl der Dichtelemente insgesamt reduziert werden, was einerseits Kosten und andererseits Monatageaufwand einspart und zusätzlich den Reinigungsaufwand verringert.

Vorteilhafterweise ist ein Dichtelement zum Dichten des Ventiltellers gegenüber dem Ventilstößel vorgesehen, wobei das Dichtelement an seinem radialen, äußeren Rand etwa bündig mit den kegelförmigen, radialen Rändern von Ventilteller und Ventilstößel abschließt. Durch diese besonders wirksame Abdichtung wird zugleich erreicht, daß sich im Dichtungsbereich keinerlei Ecken und Kanten bilden, in denen sich Mediumrückstände oder andere Ablagerungen absetzten. Dadurch ist die Reinigung der Kupplungsvorrichtung wesentlich vereinfacht.

Besonders vorteilhaft ist die integrale Ausbildung des Dichtelementes zum Dichten des Ventiltellers gegenüber dem Ventilstößel mit dem Dichtelement, das dem Ventilteller bzw. dem Ventilstößel ohnehin, nämlich zum Dichten des Ventiltellers gegenüber dem Ventilsitz bzw. dem Ventilstößel gegenüber dem Ventilstößelsitz zugeordnet ist. Dadurch werden die bereits weiter oben erwähnten Vorteile in besonders einfacher Form erzielt.

In einer bevorzugten Weiterbildung ist das Dichtelement im Matrixteil derart ausgebildet und angeordnet, daß die Dichtflächen etwa bündig mit den angrenzenden Gehäuseteilflächen abschließen, so daß Ecken und Kanten, in denen sich Medium oder andere Ablagerungen bilden können, vermieden werden. Anders ausgedrückt wird durch die genannte Ausbildung und Anordnung eine glatte, besonders leicht zu reinigende Innenfläche des den Strömungskanal umgebenden bzw. bildenden Gehäuses gebildet.

Weitere vorteilhafte und bevorzugte Merkmale ergeben sich aus den Unteransprüchen und der Beschreibung. Eine besonders bevorzugte Ausführungsform ist anhand der beigefügten Zeichnung näher beschrieben. In der Zeichnung zeigt:
- Fig. 1: eine Kupplungsvorrichtung, die aus dem Patrixteil und dem Matrixteil gebildet ist und sich in gekuppeltem Zustand in Ventil-Schließstellung befindet, im Schnitt,
- Fig. 2: eine Seitenansicht einer ersten Kupplungshälfte, nämlich des Patrixteils, im Teilschnitt,
- Fig. 3: eine Seitenansicht der zweiten Kupplungshälfte, nämlich des Matrixteils, im Teilschnitt,
- Fig. 4: eine Ausschnittsvergrößerung des Ausschnitts A gemäß Figur 1,
- Fig. 5: die Kupplungsvorrichtung gemäß Figur 1 in gekuppeltem Zustand in Ventil-Öffnungsstellung, im Schnitt,
- Fig. 6: eine Seitenansicht des Schließkegels einschließlich Ventilteller des Patrixteils im Teilschnitt.
- Fig. 7: die Kegeldichtung für den Schließkegel gemäß Figur 6 im Schnitt,
- Fig. 8: das Gehäuseteil des Matrixteils mit dem Ventilstößelsitz für den Ventilstößel, im Teilschnitt, und
- Fig. 9: die Kegelstirndichtung für den Ventilstößel im Schnitt.

Die gezeigte Kupplungsvorrichtung ist eine aseptische Kupplung für den Einsatz im chemischen und pharmazeutischen Bereich sowie in der Lebensmittelindustrie.

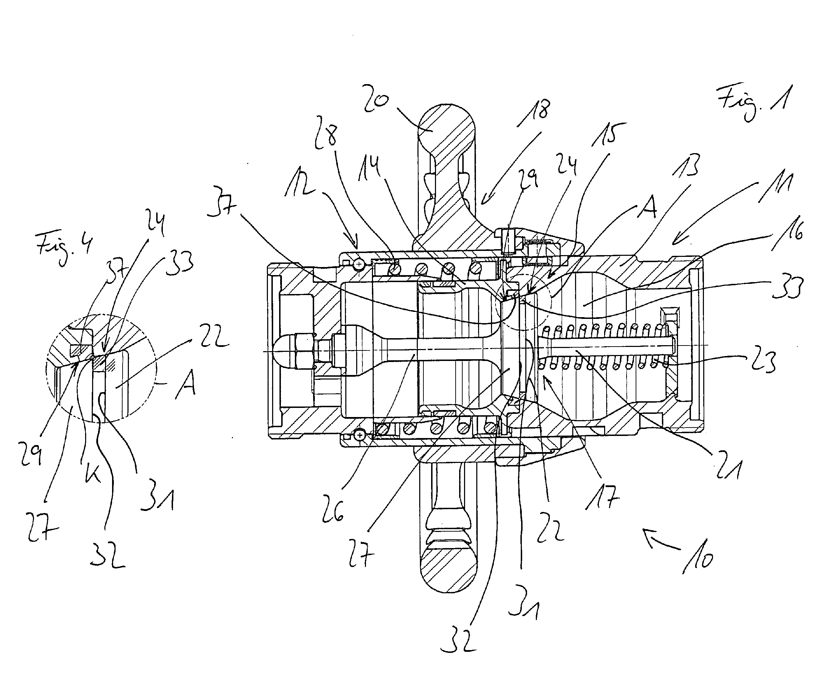

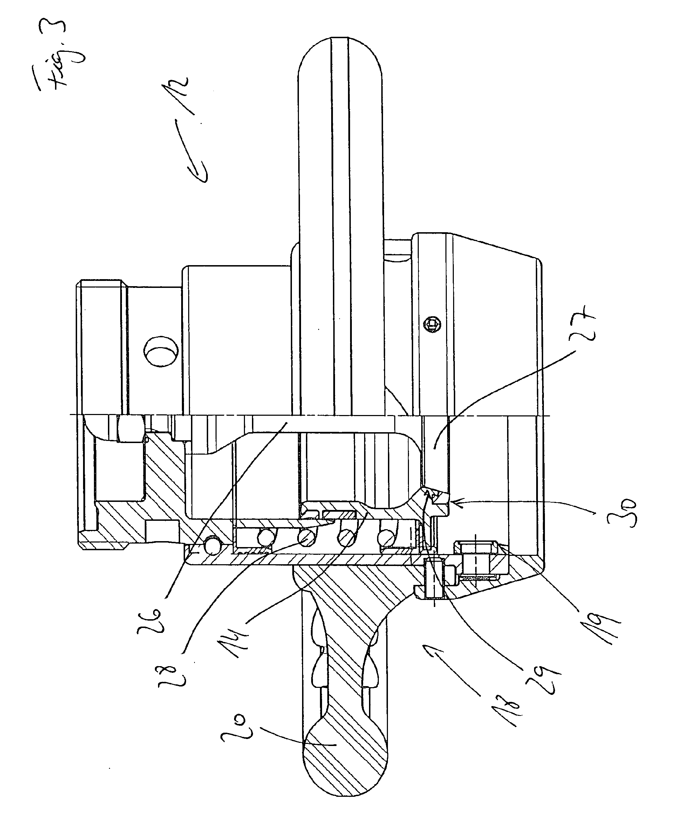

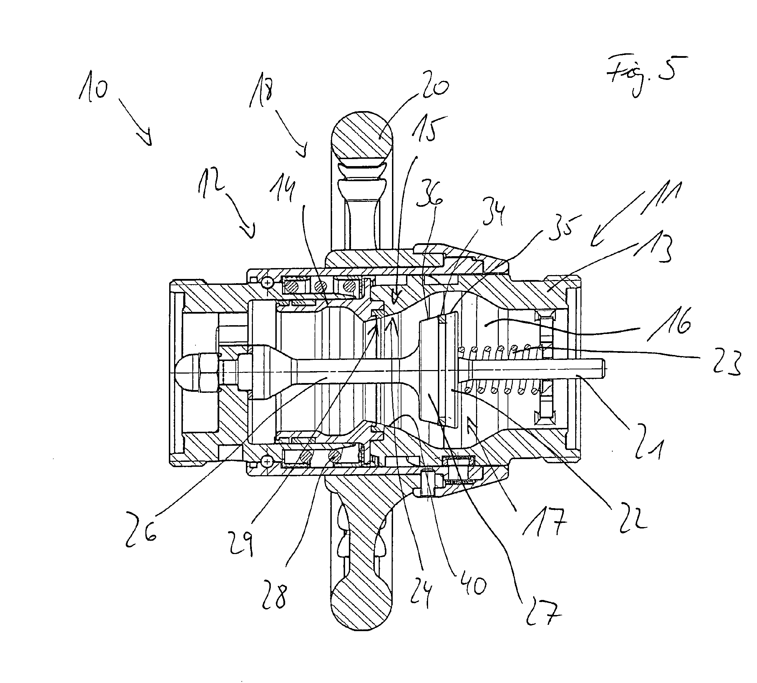

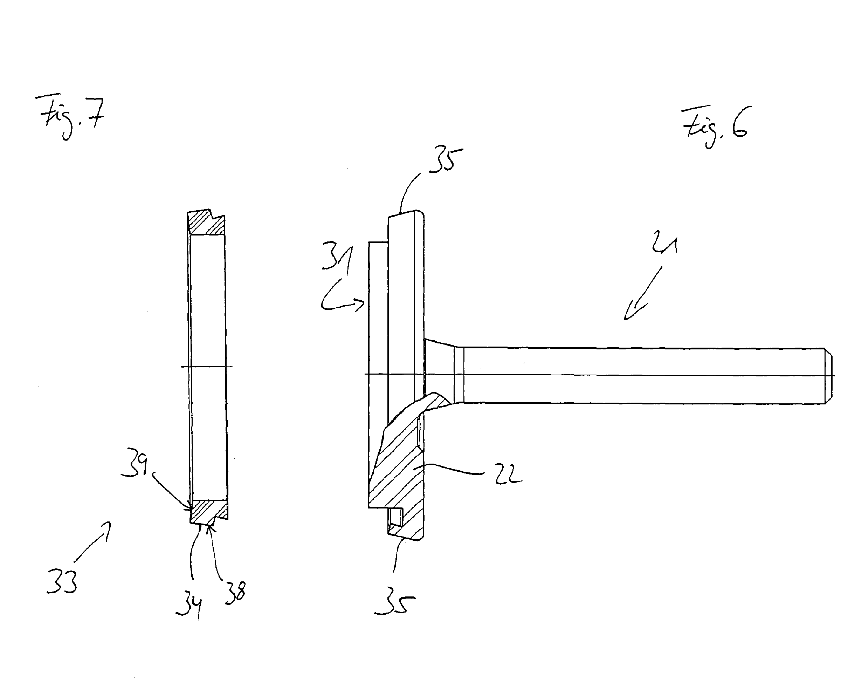

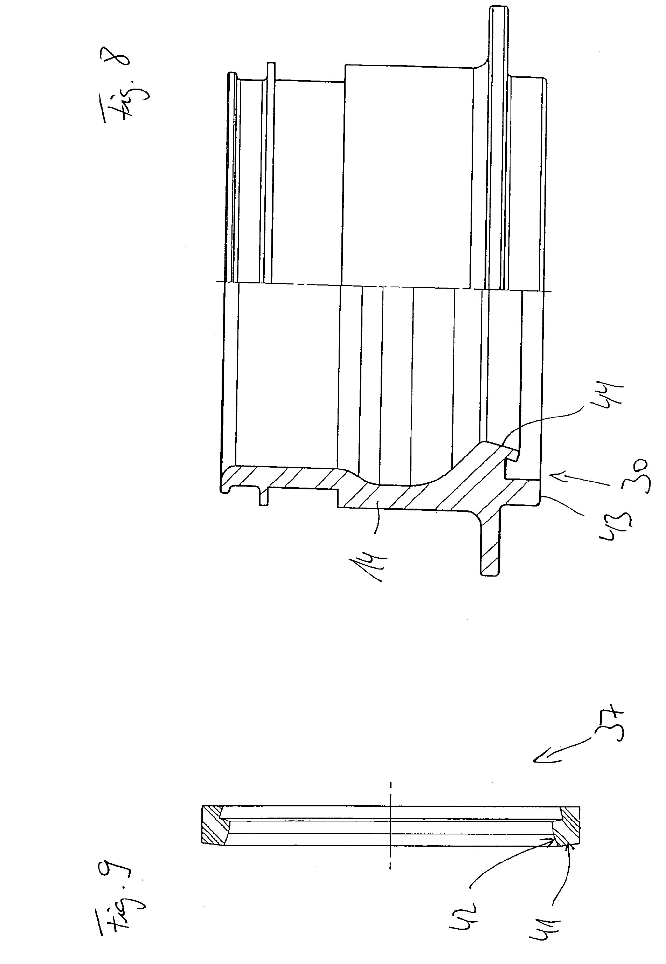

In der Figur 1 ist eine Kupplungsvorrichtung 10 mit einer ersten Kupplungshälfte 11, das als Patrixteil ausgebildet ist, und einer zweiten Kupplungshälfte 12, die als Matrixteil ausgebildet ist, gezeigt. Das Patrixteil verfügt über eine Gehäusehälfte 13 und das Matrixteil verfügt über eine Gehäusehälfte 14. Beide Gehäusehälften 13, 14 bilden in gekuppeltem Zustand das Gehäuse 15. Mittels der Kupplungshälften 11, 12 ist eine Verbindung zwischen (nicht dargestellten) Förderleitungen, Behältnissen oder dergleichen herstellbar. Das Gehäuse 15 bildet innenseitig einen Strömungskanal 16 für flüssige oder gasförmige Medien. Der Strömungskanal 16 ist durch ein Ventil 17 verschließbar oder zu öffnen. Um das Ventil 17 aus einer Ventil-Schließstellung (siehe Figur 1) in eine Ventil-Öffnungsstellung (siehe Figur 5) zu bringen, ist der Kupplungsvorrichtung 10 ein Betätigungsmittel 18 zugeordnet. Das Betätigungsmittel 18 umfaßt einen Kuppelmechanismus 19, beispielsweise ein Kurvengetriebe, und ein Auslöseelement 20, beispielsweise ein Handrad. Andere Mechanismen und Auslöseelemente sind ebenfalls einsetzbar.

Das Ventil 17 umfaßt einen Schließkegel 21 mit einem Ventilteller 22. Der Schließkegel 21 ist dem Patrixteil zugeordnet und mit einem Federelement 23 vorbelastet gegen einen Ventilsitz 24 angeordnet. Der Ventilsitz 24 ist an der Gehäusehälfte 13 am kupplungshälfteseitigen Ende 25 vorgesehen und ausgebildet. Weiterhin weist das Ventil 17 einen Schließkegel 26 mit einem tellerartigen Ventilstößel 27 auf. Der Schließkegel 26 ist dem Matrixteil zugeordnet und mit einem Federelement 28 vorbelastet gegen einen Ventilstößelsitz 29 angeordnet. Der Ventilstößelsitz 29 ist an der Gehäusehälfte 14 am kupplungsseitigen Ende 30 vorgesehen und ausgebildet. Wie bei solchen Ventilen 17 üblich, ist der Schließkegel 21 als bewegbares Teil ausgebildet, während der Schließkegel 26 als festes, stehendes Teil ausgebildet ist.

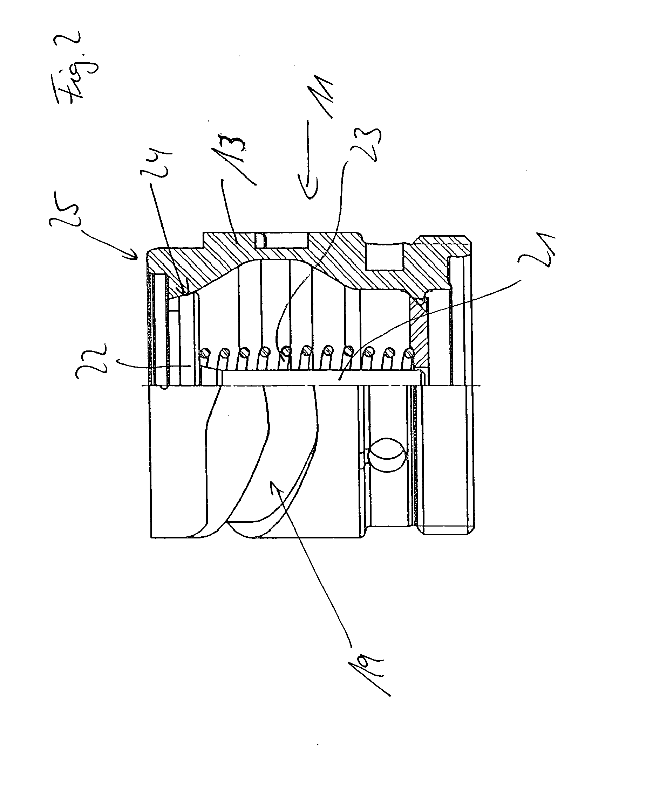

Der Kupplungsvorrichtung 10 sind weiterhin Dichtelemente zugeordnet. Die Dichtelemente dienen jeweils zum Dichten der Kupplungshälften in entkuppeltem Zustand. Mit anderen Worten schließen die Dichtelemente die Kupplungshälften 11, 12 dichtend ab, so daß aus den Kupplungshälften 11, 12 keinerlei Medium nach außen dringen kann (siehe Figuren 2 und 3). Weiterhin dichten die Dichtelemente das Gehäuse 15 nach außen in gekuppeltem Zustand ab. Das bedeutet, daß Kupplungshälften 11, 12, genauer die Gehäusehälften 13, 14 gegeneinander gedichtet sind, so daß kein Medium zwischen den Gehäusehälften 13, 14 aus dem Strömungskanal 16 nach außen dringen kann.

Der Ventilteller 22 und der Ventilstößel 27 liegen mit ihren Stirnflächen 31 bzw. 32 in gekuppeltem Zustand einander gegenüber. Dies gilt insbesondere für die Ventil-Öffnungsstellung gemäß Figur 5. Mindestens in dieser Stellung sind der Ventilteller 22 und der Ventilstößel 27 mit ihren einander zugekehrten Stirnflächen 31, 32 gegenüber dem Strömungskanal 16 abgedichtet. Das bedeutet, daß das Medium, das durch den Strömungskanal 16 fließt, davon abgehalten wird, mit den Stirnflächen 31, 32 in Kontakt zu kommen. Anders ausgedrückt werden die Stirnflächen 31, 32 zu keinem Zeitpunkt und in keiner Position durch das Medium benetzt.

In einer bevorzugten Weise wird diese Dichtung durch ein Dichtelement 33 geschaffen, das zum Dichten des Ventiltellers 22 gegenüber dem Ventilstößel 27 vorgesehen ist. Das Dichtelement 33 ist zwischen dem Ventilteller 22 und dem Ventilstößel 27 angeordnet, und zwar sandwichartig und radial umlaufend zwischen den Stirnflächen 31, 32. Das ringförmige und als Kegeldichtung ausgebildete Dichtelement 33 schließt an seinem radialen, äußeren Rand 34 etwa bündig mit den kegelförmigen, radialen Rändern 35, 36 von Ventilteller 22 und Ventilstößel 27 ab. Die Ränder 34 bis 36 bilden somit quasi eine glatte ebene Fläche, an der das Medium vorbeiströmen kann. In der gezeigten Ausführungsform ist das Dichtmittel 33 dem Ventilteller 22 zugeordnet. Alternativ kann das Dichtelement 33 aber auch dem Ventilstößel 27 zugeordnet sein.

In der gezeigten Ausführungsform ist ein zweites Dichtelement 37 vorgesehen, das dem Matrixteil zugeordnet ist. Für den Fall, daß das erste Dichtelement 33 dem Ventilstößel 27 zugeordnet ist, wäre das zweite Dichtelement 37 dem Patrixteil zugeordnet. Das Dichtelement 37 ist im Matrixteil derart ausgebildet und angeordnet, daß die Dichtflächen etwa bündig mit den angrenzenden Gehäuseteilflächen abschließen. Details hierzu werden weiter unten näher beschrieben. In gekuppeltem Zustand (siehe Figur 1) liegen sich das Dichtelement 33 und das Dichtelement 37 diametral gegenüber. Insbesondere aus der Figur 4 ist ersichtlich, daß die beiden Dichtelemente 33, 37 in gekuppeltem Zustand und in Ventil-Schließstellung umlaufend an einem gemeinsamen Kontaktpunkt K nahe beieinander liegen und sich optional sogar berühren.

Eines der beiden Dichtelemente 33, 37, vorzugsweise jedoch beide Dichtelemente 33, 37 weisen mehrere Dichtflächen mit unterschiedlichen Dichtfunktionen auf. Das Dichtelement 33 verfügt über zwei Dichtflächen 38, 39. Die kegelförmige Dichtfläche 38 ist radial ausgerichtet und dient zum Dichten des Ventiltellers 22 gegenüber dem korrespondierenden Ventilsitz 24 mit seiner kegelförmigen Gehäuseteilfläche 40 in der Gehäusehälfte 13 des Patrixteils. Die Dichtfläche 39 ist axial ausgerichtet, und zwar in Richtung des Ventilstößels 27 bzw. dessen Stirnfläche 32, und dient zum Dichten des Ventiltellers 22 gegenüber dem Ventilstößel 27. Mit anderen Worten ist das Dichtelement 33 zum Dichten des Ventiltellers 22 gegenüber dem Ventilstößel 27 integraler Bestandteil des dem Ventilteller 22 zugeordneten Dichtelementes 33. Anders ausgedrückt existiert am Ventilteller 22 nur ein Dichtelement, nämlich das Dichtelement 33, das mit der doppelten Dichtfunktion einerseits den Ventilteller 22 gegenüber dem Patrixteil und andererseits den Ventilteller 22 gegenüber dem Ventilstößel 27 dichtet. Alternativ kann das Dichtelement 33 auch am Ventilstößel 27 angeordnet sein, vorausgesetzt, das zweite Dichtelement 37 befindet sich dann im Patrixteil.

Das ringförmige und als Kegelstirndichtung ausgebildete Dichtelement 37 ist der Gehäusehälfte 14 des Matrixteils zugeordnet und weist ebenfalls zwei Dichtflächen 41, 42 auf. Die Dichtfläche 41 ist axial ausgerichtet und weist in Richtung der Gehäusehälfte 13 des Patrixteil. Die kegelförmige Dichtfläche 42 ist dem Ventilstößel 27 zugewandt, und zwar dessen kegelförmigem Rand 36. Die Dichtfläche 41 ist etwa bündig mit der stirnseitigen Gehäuseteilfläche 43 der Gehäusehälfte 14. Die Dichtfläche 42 ist etwa bündig mit der radialseitigen, dem Strömungskanal 16 zugewandten Gehäuseteilfläche 44. Die Gehäuseteilfläche 40, die Gehäuseteilfläche 44 und die Dichtfläche 42 bilden eine glatte, ebene Fläche. Gleiches gilt für den Rand 35, den Rand 36 sowie die Dichtfläche 38.

Die Dichtung zwischen dem Ventilteller 22 und dem Ventilstößel 27 kann jedoch auch durch andere, z.B. separate Dichtelemente erreicht werden. Dies ist insbesondere bei der Nachrüstung bestehender Kupplungsvorrichtungen von Bedeutung.

## Patentansprüche

1. Kupplungsvorrichtung, insbesondere zum Verbinden von flüssige oder gasförmige Medien transportierende Förderleitungen, umfassend zwei Kupplungshälften (11,12) mit jeweils einer Gehäusehälfte (13, 14) zur Bildung eines Gehäuses (15) mit einem Strömungskanal (16), von denen eine Kupplungshälfte (11) als Patrixteil ausgebildet ist und einen vorbelastet gegen einen am kupplungshälfteseitigen Ende (25) vorgesehenen Ventilsitz (24) angeordneten Ventilteller (22) aufweist und die andere Kupplungshälfte (12) als Matrixteil ausgebildet ist und einen vorbelastet gegen einen am kupplungshälfteseitigen Ende (30) vorgesehenen Ventilstößelsitz (29) angeordneten Ventilstößel (27) aufweist, wobei die Kupplungsvorrichtung (10), insbesondere mittels eines Kurvengetriebes infolge einer Drehbewegung zwischen den Kupplungshälften (11, 12), aus einer Ventil-Schließstellung in eine Ventil-Öffnungsstellung und umgekehrt bringbar ist und über Dichtelemente jeweils zum Dichten der Kupplungshälften (11, 12) in entkuppeltem Zustand und zum Dichten des Gehäuses (15) nach außen in gekuppeltem Zustand verfügt, wobei der Ventilteller (22) und der Ventilstößel (27) mit ihren einander zugekehrten Stirnflächen (31, 32) mindestens in der Ventil-Öffnungsstellung gegenüber dem Strömungskanal (16) abgedichtet sind, **dadurch gekennzeichnet, daß** ein erstes Dichtelement (33) wahlweise dem Ventilteller (22) oder dem Ventilstößel (27) und ein zweites Dichtelement (37) entsprechend wahlweise dem Matrixteil oder dem Patrixteil zugeordnet ist, wobei beide Dichtelemente (33, 37) jeweils zwei separate Dichtflächen (38, 39; 41, 42) mit unterschiedlichen Dichtfunktionen aufweisen.

2. Kupplungsvorrichtung nach Anspruch 1, **dadurch gekennzeichnet, daß** das Dichtelement (33) zum Dichten des Ventiltellers (22) gegenüber dem Ventilstößel (27) vorgesehen ist.

3. Kupplungsvorrichtung nach Anspruch 1 oder 2, **dadurch gekennzeichnet, daß** das Dichtelement (33) zum Dichten des Ventiltellers (22) gegenüber dem Ventilstößel (27) sandwichartig und radial umlaufend zwischen den Stirnflächen (31, 32) angeordnet ist.

4. Kupplungsvorrichtung nach einem der Ansprüche 1 bis 3, **dadurch gekennzeichnet, daß** das Dichtelement (33) an seinem radialen, äußeren Rand (34) etwa bündig mit den kegelförmigen, radialen Rändern (35, 36) von Ventilteller (22) und Ventilstößel (27) abschließt.

5. Kupplungsvorrichtung nach einem der Ansprüche 1 bis 4, **dadurch gekennzeichnet, daß** mindestens eines der beiden Dichtelemente (33, 37) mehrere Dichtflächen mit unterschiedlichen Dichtfunktionen aufweist.

6. Kupplungsvorrichtung nach einem der Ansprüche 1 bis 5, **dadurch gekennzeichnet, daß** das Dichtelement (33) zum Dichten des Ventiltellers (22) gegenüber dem Ventilstößel (27) integraler Bestandteil des dem Ventilteller (22) bzw. dem Ventilstößel (27) zugeordneten Dichtelementes (33) ist.

7. Kupplungsvorrichtung nach einem der Ansprüche 1 bis 6, **dadurch gekennzeichnet, daß** das dem Ventilteller (22) zugeordnete Dichtelement (33) eine radial und eine axial gerichtete Dichtfläche (38, 39) aufweist.

8. Kupplungsvorrichtung nach einem der Ansprüche 1 bis 7, **dadurch gekennzeichnet, daß** das Dichtelement (33) eine erste kegelförmige Dichtfläche (38) aufweist, die der Gehäusehälfte (13) des Patrixteils zugewandt ist, und eine zweite Dichtfläche (39) aufweist, die dem Ventilstößel (27) zugewandt ist.

9. Kupplungsvorrichtung nach einem der Ansprüche 1 bis 8, **dadurch gekennzeichnet, daß** das dem Matrixteil zugeordnete Dichtelement (37) eine radial und eine axial gerichtete Dichtfläche (41, 42) aufweist.

10. Kupplungsvorrichtung nach einem der Ansprüche 1 bis 9, **dadurch gekennzeichnet, daß** das Dichtelement (37) eine erste Dichtfläche (41) aufweist, die der Gehäusehälfte (13) des Patrixteils zugewandt ist, und eine zweite kegelförmige Dichtfläche (42) aufweist, die dem Ventilstößel (27) zugewandt ist.

11. Kupplungsvorrichtung nach einem der Ansprüche 1 bis 10, **dadurch gekennzeichnet, daß** das Dichtelement (33) im Ventilteller (22) eine ringförmige Kegeldichtung ist.

12. Kupplungsvorrichtung nach einem der Ansprüche 1 bis 11, **dadurch gekennzeichnet, daß** das dem Matrixteil zugeordnete Dichtelement (37) eine ringförmige Kegelstirndichtung ist.

13. Kupplungsvorrichtung nach einem der Ansprüche 1 bis 12, **dadurch gekennzeichnet, daß** sich die Dichtelemente (33, 37) in gekuppeltem Zustand bei Ventil-Schließstellung diametral gegenüber liegen, derart, daß sich die Dichtelemente (33, 37) in einem Kontaktpunkt K berühren.

14. Kupplungsvorrichtung nach einem der Ansprüche 1 bis 13, **dadurch gekennzeichnet, daß** das Dichtelement (37) im Matrixteil derart ausgebildet und angeordnet ist, daß die Dichtflächen (41, 42) etwa bündig mit den angrenzenden Gehäuseteilflächen (43, 44) abschließen.
